# EUROPEAN PATENT SPECIFICATION

(11) **EP 1 147 824 B1**
(45) Date of publication and mention of the grant of the patent: **26.04.2006**
(21) Application number: 98952749.4
(22) Date of filing: 11.11.1998
(51) Int. Cl.: B06B 1/02, B01D 33/62, B01D 29/80

(54) **ULTRASOUND DEVICE FOR IMPROVING THE SOLID-LIQUID SEPARATION PROCESS IN SUSPENSIONS**
ULTRASCHALLVORRICHTUNG ZUR VERBESSERUNG DES FLÜSSIG-FESTTRENNUNGSVERFAHRENS IN SUSPENSIONEN
DISPOSITIF ULTRASONORE DESTINE A AMELIORER LES PROCEDES DE SEPARATION SOLIDE-LIQUIDE DE SUSPENSIONS

(43) Date of publication of application: 24.10.2001
(73) Proprietor: CONSEJO SUPERIOR DE INVESTIGACIONES CIENTIFICAS, 28006 Madrid (ES)
(72) Inventor: GALLEGO JUAREZ, Juan Antonio Inst. de Acustica, 28006 Madrid (ES); RODRIGUEZ CORRAL, German Inst. de Acustica, 28006 Madrid (ES); ELVIRA SEGURA, Luis Inst. de Acustica, 28006 Madrid (ES)
(74) Representative: Ungria Lopez, Javier
(86) International application number: PCT/ES1998/000304
(87) International publication number: WO 2000/027548

(56) References cited:
- ES-T3- 2 057 285
- GB-A- 2 077 131
- US-A- 3 707 230
- US-A- 4 166 034
- DATABASE WPI Week 0696, Derwent Publications Ltd., London, GB; Class H09, AN 1996-050484, XP002953008 & DE 44 22 503 A1 (KLOECKNER-HUMBOLDT-DEUTZ AG) 04 January 1996

## Description

The present invention refers to the device developed for the application of an ultrasonic dehydration process, already disclosed in PCT/EP9601935, to solid-liquid separation in sludge pastes (known as "cakes") resulting from the filtering of high concentrated suspensions. In the above mentioned process already patented, the liquid is removed from the inside of the porous solid where it is located, by means of the action of ultrasonic pressure, exerted in combination with a certain static pressure and in direct contact of the ultrasonic radiator (vibrating plate type) with the mass to be dehydrated. Additionally suction is applied through some holes made in the support where the product to be dehydrated is located in order to favor removal of the liquid. A stream of air conveyed over the product may also favor the removal of the liquid that is removed from the porous body by acoustic vibration. The present invention refers to a device for the application of the cited process to the final drying step of the sludge_paste that is formed on the surface of filters of ceramic material, textile material or any other material or porous structure that are activated by vacuum or by pressure in processes of solid/liquid separation in concentrated suspensions. In this case the ultrasonic pressure is applied by making contact of the ultrasound emitting vibrating plate with the sludge paste to be dehydrated. The positive static pressure, exerted from the outside, may be replaced depending on the type of filter, by a vacuum exerted through the filter. The use of an additional stream of air may be convenient. The elimination of the liquid takes place through the pores of the filter thanks to the cited pressure or depression.

There is prior art of the application of ultrasound in solid-liquid separation in concentrated suspensions. In particular, U.S. patent no. 5292421 presents a separation system with the help of electrostatic and acoustic elements. However, the operating principle (the action of the acoustic field is exerted on the suspension through the liquid and not on the sludge paste resulting from the filtering process) as well as the arrangement of the device (it is an arrangement of small ultrasonic transducers) differ notably from the above mentioned process itself, object of prior patent (PCT/EP9601935), as well as from the device proposed herein for the application of this process.

The usual methods of solid-liquid separation by filtering with final sludge paste formation, are limited by the final moisture content that is achieved in said sludge paste. The sludge paste is a porous medium (containing liquid and air) whose solid phase is formed by particles. In vacuum filters, as the dehydration of said medium is produced, the water withdraws from the pores and is replaced by air. In pressure filters the withdrawal of water is accompanied by compacting of the solid phase. However, in both cases a certain amount of residual liquid that is very difficult to eliminate, remains. On the one hand, there is a certain portion of chemically absorbed liquid molecules. Besides there is liquid that is retained by capillary pressure in the interstices of the particles and in channels between the particles. This capillary pressure ends up balancing with the depression or static pressure, the eliminating of liquid from the sludge paste ceasing. High intensity ultrasound favors the elimination of this residual liquid by means of the effects produced by the stresses and accelerations to which the liquid phase as well as the solid phase are subjected. The stresses and accelerations give rise to changes in the porous structure, variations of viscosity (thixotropic effects), the formation of microbubbles and activity thereof (cavitation and rectified diffusion), etc. The importance of some effects or others depends on the type and structure of the material that is being treated, the treatment time and the ultrasound intensity applied.

US-3,707,230 has as an object to remove solids from a filter and thus to clean the filter; and discloses an apparatus designed to produce erosion in order to remove said solids. The design of the apparatus disclosed is not critical for the purpose of the invention. The method disclosed in said patent - although using ultrasonic energy - involves the production of different phenomena, and different conditions, for the application of said ultrasonic energy

US-4,166,034 discloses a drum or disc having a filtering membrane on the surface, and said drum rotates into and out of a bath with particulate material, such that a filter cake is formed on the outside of the membrane. A vibrator member having a surface in the form of a long narrow strip is placed against the drum across a limited longitudinal slice thereof in a region of the filter-cake. The vibratory member may be in the form of a resonantly vibrated bar or tube which is biased against the outer wall of the drum. As indicated in the description, the vibrator member is applied only and selectively to a long strip of the drum rather than to the entire drum. Furthermore the waves applied are not ultrasonic waves and thus this device is not a ultrasonic device, as opposite to the device of the present invention. The mode of action on the filter cake is different due to the difference, among other aspects, in the frequency the vibrator uses.

### Description of the invention

The present refers to an ultrasonic device for the improvement of processes of solid-liquid separation in suspensions, characterized in that it is comprised of one or several transducers (5), said transducers are constituted by a vibrator and a plate-shaped radiator (6), said plate-shaped radiator has on its front surface a grooved profile and on its rear surface a stepped profile.

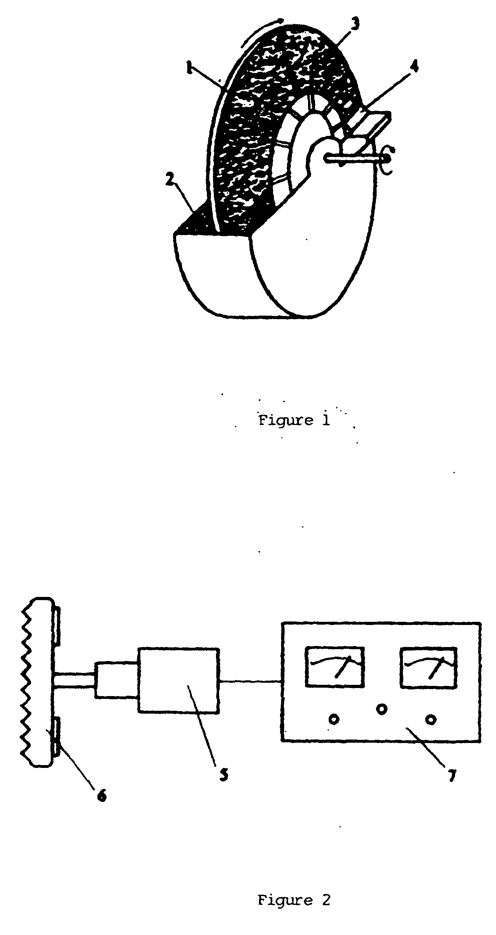

The invention is oriented to the device for applying the ultrasonic process to a conventional filtering system activated by vacuum or by pressure. A conventional filtering system like the one that is represented in figure 1, consists basically of a disk of ceramic material, textile material or of any other material or porous structure (1), that rotates partially submerged in the suspension (2), being subjected, in the case of this example, to depression. This depression produces the removal of most of the liquid through the micropores of the filter that, by capillary effect, prevent the penetration of air. The sludge paste, that is formed when the solid particles deposit, while the liquid passes through the pores of the filter, is retained on the surface (3) of the filter. This sludge paste constitutes a porous structure formed by the solid matter of the initial suspension along with a certain amount of remaining liquid and air.

Then a dehydration step of the sludge paste takes place. This step is carried out in air, once the considered sector of the disk is outside the suspension. The liquid is partially removed by vacuum obtaining a more concentrated sludge paste. The material that this sludge paste contains constitutes the final product of the conventional separation process and is withdrawn from the filter by means of some blades (4).

The proposed ultrasonic device acts in the dehydrating step of the sludge paste. This device (figure 2) basically consists of a piezoelectric or magnetostrictive transducer (5) with a plate-shaped radiator (6) fed by an electronic system that generates a high potential sinusoidal wave with frequency control and follow-up (7) (European patent EP 450030A1 1991 and U.S. patent 5299175, 1994). It is important to design the plate-shaped radiator (6) correctly, so that the distribution of displacements on it enables uniform treatment of the sludge paste. For this purpose and as a basic criterion, a form of flexural vibration whose nodal lines are perpendicular to the direction of movement of the medium that is to be treated has to be chosen. The surface of the plate-shaped radiator (6) in contact with the sludge paste may be flat, grooved or with any other type of profile; in general, a profile with grooves with a width much smaller than the wave length in the metal of which the plate is made facilitates the contact with the material to be dehydrated and maintains the energy transfer. The rear surface of said plate-shaped radiator (6) may be stepped in order to control the distribution of vibration amplitude. The edges of the plate will be rounded and/or bevel-edged in order to prevent the breaking of the sludge paste upon coming in contact with the plate-shaped radiator.

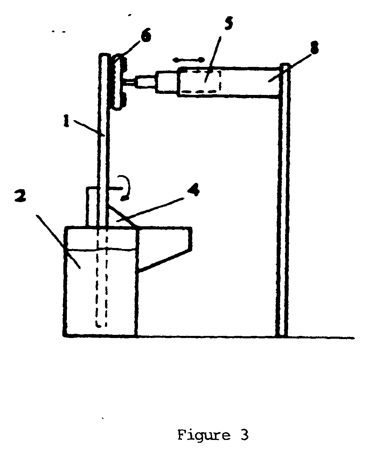

Figure 3 shows the diagram of the device coupled to a conventional filter, the surface of the plate-shaped radiator (6) being placed in contact with the surface of the sludge paste. The acoustic transducers (5) are assembled in some supports (8) that permit the distance between the plate-shaped radiator (6) and the surface of the filter to be varied. This distance will be adjusted in terms of the thickness of the sludge paste and of its consistency. The plate shaped radiator-sludge paste contact ensures a suitable transfer of ultrasonic energy between the ultrasonic emitter and the medium to be dehydrated, thanks to a good adaptation of mechanical impedance. The treatment time is directly linked to the rotation speed of the filter. The acoustic intensity will vary according to the particular application, and in general, the thicker the sludge paste is the greater the intensity has to be. The application can be done by operating with one or several transducers depending on the needs.

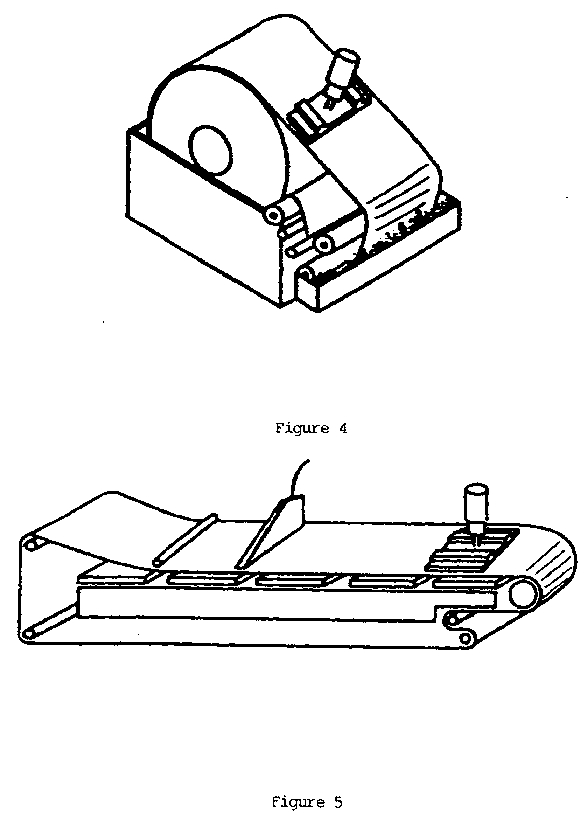

Although the device of the present invention has been tested with a rotating disk filter, it could also be used with other designs of filters, such as belt filters, drum filters, etc. (figures 4 and 5 show these possible applications).

## Claims

1. Ultrasonic device for the improvement of processes of solid-liquid separation in suspensions, **characterized in that** it is comprised of one or several transducers (5), said transducers are constituted by a vibrator and a plate-shaped radiator (6), said plate-shaped radiator has on its front surface a grooved profile and on its rear surface a stepped profile.

2. Ultrasonic device according to claim 1, **characterized in that** the plate-shaped radiator (6) has edges that are rounded and/or bevel-edged.

3. Ultrasonic device according to claim 1, **characterized in that** the vibrator is piezoelectric or magnetostrictive.

4. Use of the ultrasonic device defined in any of the preceding claims in a process of solid-liquid separation in suspensions.

5. Use of the ultrasonic device according to claim 4 **characterised in that** the ultrasonic device is applied to a filter acting on a sludge paste that is formed on the surface of the filter as a result of a filtering cycle in a liquid medium. 1.

6. Use of the ultrasonic device according to claim 5 **characterised in that** the ultrasonic device is applied to a filter acting on the sludge paste during the dehydrating step of the sludge paste.

7. Use of the ultrasonic device according to claim 5 **characterised in that** the ultrasonic device acts on the sludge paste by means of a plate-shaped radiator as defined in claim 1, which irradiates in contact with the sludge paste.

8. Use of the ultrasonic device according to claim 5 **characterised in that** the filter is a textile filter or a ceramic filter.

9. Use of the ultrasonic device according to claim 5, **characterised in that** the filter is a rotating disk filter or a belt filter.

## Revendications

1. Dispositif à ultrasons destiné à améliorer les traltements de séparation solide-liquide dans les suspensions, **caractérisé en ce qu'**il est constitué d'un ou plusieurs transducteurs (5), lesdits transducteurs sont constitués d'un vibreur et d'un élément rayonnant (6) en forme de plaque, et **en ce que** ledit élément rayonnant en forme de plaque possède, sur sa surface antérieure, un profil rainuré et, sur sa surface postérieure, un profil en gradins.

2. Dispositif à ultrasons selon la revendication 1, **caractérisé en ce que** l'élément rayonnant (6) en forme de plaque possède des bords qui sont arrondis et, ou blen, taillés en biseau.

3. Dispositif à ultrasons selon la revendication 1, **caractérisé en ce que** le vibreur est piézoélectrique ou magnétostrictif.

4. Utilisation du dispositif à ultrasons défini dans l'une quelconque des revendications précédentes, dans un traitement de séparation solide-liquide dans des suspensions.

5. Utilisation du dispositif à ultrasons selon la revendication 4, **caractérisée en ce que** le dispositif à ultrasions est appliqué à un filtre en agissant sur la pâte boueuse qui se forme à la surface du filtre en résultat d'un cycle de filtrage dans un milieu liquide.

6. Utilisation du dispositif à ultrasons selon la revendication 5, **caractérisée en ce que** le dispositif à ultrasons est appliqué à un filtre en agissant sur la pate boueuse pendant l'opération de déshydratation de la pâte boueuse.

7. Utilisation du dispositif à ultrasons selon la revendication 5, **caractérisée en ce que** le dispositif à ultrasons agit sur la pâte boueuse par l'intermédiaire d'un élément rayonnant en forme de plaque tel que défini dans ta revendication 1, lequel émet en contact avec la pâte boueuse.

8. Utilisation du dispositif à ultrasons selon la revendication 5, **caractérisée en ce que** le filtre est un filtre textile ou un filtre céramique.

9. Utilisation du dispositif à ultrasons selon la revendication 5, **caractérisée en ce que** le filtre est un filtre à disque rotatif ou un filtre à bande.

## Patentansprüche

1. Ultraschallvorrichtung zur Verbesserung von Prozessen von Fest-Flüssig-Trennung in Suspensionen, **dadurch gekennzeichnet, dass** sie aus einem oder mehreren Wandlern (5) besteht, wobei die Wandler durch einen Schwingungserzeuger und einen plattenförmigen Strahler (6) gebildet werden und der plattenförmige Strahler an seiner Vorderseite ein gerilltes Profil und an seiner Rückseite ein gestuftes Profil hat.

2. Ultraschallvorrichtung nach Anspruch 1, **dadurch gekennzeichnet, dass** der plattenförmige Strahler (6) Kanten hat, die abgerundet und/oder gebrochen sind.

3. Ultraschallvorrichtung nach Anspruch 1, **dadurch gekennzeichnet, dass** der Schwingungserzeuger piezoelektrisch oder magnetostriktiv ist.

4. Einsatz der Ultraschallvorrichtung nach einem der vorangehenden Ansprüche bei einem Prozess von Fest-Flüssig-Trennung in Suspensionen.

5. Einsatz der Ultraschallvorrichtung nach Anspruch 4, **dadurch gekennzeichnet, dass** die Ultraschallvorrichtung bei einem Filter eingesetzt wird, der auf eine Schlammmasse einwirkt, die an der Oberfläche des Filters aufgrund eines Filterzyklus in einem flüssigen Medium ausgebildet wird.

6. Einsatz der Ultraschallvorrichtung nach Anspruch 5, **dadurch gekennzeichnet, dass** die Ultraschallvonichtung bei einem Filter eingesetzt wird, der auf die Schlammmasse während des Schrittes des Dehydrierene der Schlammmasse einwirkt.

7. Einsatz der Ultraschallvorrichtung nach Anspruch 5, **dadurch gekennzeichnet, dass** die Ultraschallvorrichtung mittels eines plattenförmigen Strahlers nach Anspruch 1, der in Kontakt mit der Schlammmasse strahlt, auf die Schlammmasse einwirkt.

8. Einsatz der Ultraschallvorrichtung nach Anspruch 5, **dadurch gekennzeichnet, dass** der Filter ein textiler Filter oder ein keramischer Filter ist.

9. Einsatz der Ultraschallvorrichtung nach Anspruch 5, **dadurch gekennzeichnet, dass** der Filter ein sich drehender Scheibenfilter oder ein Bandfilter ist.
